# EUROPÄISCHE PATENTANMELDUNG

(11) **EP 4 790 330 A1**
(43) Veröffentlichungstag der Anmeldung: **12.08.2026**
(21) Anmeldenummer: 26156657.4
(22) Anmeldetag: 05.02.2026
(51) Int. Cl.: F24H 15/12, B01D 53/26, F24F 11/36, F25B 30/02, F25B 49/00, F25B 17/08, F24F 3/14

(54) **SORPTIONSBASIERTER THERMOZYKLISCHER LUFTENTFEUCHTER**

(30) Priorität: 05.02.2025 DE 102025104197
(71) Anmelder: Vaillant GmbH, 42859 Remscheid NRW (DE)
(72) Erfinder: Krampe-Zadler, Christof, 44628 Herne (DE); Laurenz, Eric, 79194 Gundelfingen (DE)
(74) Vertreter: Popp, Carsten

(57) **Zusammenfassung**

Vorrichtung und Verfahren zur Verringerung des Feuchtegehalts im Wärmepumpengehäuse (1) einer Wärmepumpe mittels thermozyklischer Adsorption, wobei die Wärmepumpe mit einem Kältekreis (2) und einem brennbaren Kältemittel betrieben wird, die Wärmepumpe mit allen Kältemittel führenden Installationen von einem geschlossenen Wärmepumpengehäuse (1) umschlossen ist, welches über ein Sorptionsbett (8) verfügt, mit dem brennbare Kältemittel adsorptiv gefiltert werden können, bevor sie das Wärmepumpengehäuse (1) in die Aufstellungsumgebung des Wärmepumpengehäuses (1) verlassen können, wobei ein Wasserdampfadsorber (10) mit einem anströmbaren Sorptionsbett (106, 202, 302) im Wärmepumpengehäuse (1) vorgesehen wird, das mit einem Sorptionsmittel ausgestattet ist, mit welchem selektiv Wasserdampf adsorbiert wird, Kältemitteldampf jedoch nicht, der Wasserdampfadsorber (10) mit einer Heizeinrichtung (105, 203, 304) versehen ist, mit dem eine zur Desorption geeignete Temperatur erreicht werden kann, der Wasserdampfadsorber (10) mit einer Kühleinrichtung (206, 305) versehen ist, mit dem desorbierter Wasserdampf auskondensiert werden kann, eine Auffangvorrichtung für Kondensat vorgesehen ist, und eine Einrichtung zur Abführung des Kondensats vorgesehen ist. Es wird abwechselnd oder gleichzeitig adsorbiert und desorbiert.

## Beschreibung

Die Erfindung betrifft irreguläre Zustände in Kältekreisen, in denen ein als Kältemittel wirkendes, gefährliches Arbeitsfluid in einem thermodynamischen Kreisprozess, wie zum Beispiel dem Clausius-Rankine-Kreisprozess, geführt wird. Vorwiegend sind dies Wärmepumpen, Klimaanlagen und Kühlgeräte, wie sie in Wohngebäuden gebräuchlich sind. Insbesondere betrifft die Erfindung eine Wärmepumpe, die innerhalb eines Wohngebäudes aufgestellt wird und die ihre Wärme aus dem Außenbereich des Wohngehäuses bezieht, entweder aus dem Erdreich oder aus der Luft oder beidem. Bei brennbaren Kältemitteln ist die Aufstellung innerhalb von Wohngebäuden insofern problematisch, als bei Leckagen die Bildung einer entzündlichen Atmosphäre auf jeden Fall verhindert werden muss, auch wenn es sich dabei um einen sehr seltenen Fall handelt.

Unter Wohngebäuden werden dabei Privathäuser, Miethauskomplexe, Krankenhäuser, Hotelanlagen, Gastronomie und kombinierte Wohn- und Geschäftshäuser verstanden, in denen Menschen dauerhaft leben und arbeiten, im Unterschied zu mobilen Vorrichtungen wie KFZ-Klimaanlagen oder Transportboxen, oder auch Industrieanlagen oder medizintechnischen Geräten. Gemeinsam ist diesen Kreisprozessen, dass sie unter Einsatz von Energie Nutzwärme oder Nutzkälte erzeugen und Wärmeverschiebungssysteme bilden.

Ein erfolgreiches Beispiel aus dem bekannten Stand der Technik ist in der Schrift DE 10 2019 114 738 A1 "Fluidadsorption" beschrieben. Hierbei ist eine innen aufgestellte Wärmepumpe vorgesehen, die mit einem Kältekreis betrieben ist, in welchem ein brennbares Kältemittel unter Druck umläuft. Der Kältekreis bestehend aus mindestens einem Verdichter, einem Entspannungsventil, zwei Wärmeübertragern und den üblichen Ventilen und Anschlüssen für Wärmeträgerfluide ist in einem inneren Gehäuse angeordnet, welches im Wesentlichen dicht gegenüber dem Aufstellungsraum ist. Außerhalb des inneren Gehäuses ist ein Adsorber mit einem Aktivkohlebett angeschlossen, der auf der Eintrittsseite mit dem inneren Gehäuse und auf der Austrittsseite mit dem Aufstellungsraum verbunden ist. Im Falle einer Leckage einer der kältemittelführenden Ausrüstungen kann entweichendes Kältemittel, welches sich mit Luft gemischt hat, durch den Adsorber strömen und das Kältemittel wird auf dem Adsorptionsmittel im Adsorber abgeschieden. Eine ähnliche, weiterentwickelte Wärmepumpe wird in der DE 10 2022 100 285 A1 beschrieben.

In der DE 10 2023 114 838 A1 wird eine andere Weiterentwicklung beschrieben, bei der mindestens zwei Adsorptionsvorrichtungen im Innenraum des den Kältekreis umschließenden Umschließungsgehäuses vorgesehen sind. Die eine der beiden reinigt austretende Luft, und kann leckagebedingt ausgetretenes Kältemittelgas vollständig abscheiden. Die andere reinigt eintretende Luft aus dem Aufstellungsraum. Befindet sich die Feuchtigkeit bereits im Umschließungsgehäuse, kann sie nicht entfernt werden, sie tritt dann in den Adsorber ein, der die austretende Luft reinigen soll, wobei aber der Adsorber durch die Feuchtigkeit an Kapazität für das Kältemittel verliert, welches er adsorbieren soll.

Vorrichtungen, die allein der Trocknung dienen, sind in großer Zahl bekannt. Die DE 10 2014 216 377 A1 beschreibt eine Luftentfeuchtungsvorrichtung zum Entfeuchten von Luft für ein Batteriesystem. Die Luftentfeuchtungsvorrichtung weist eine Trockenmittelkammer mit einem Trocknungsmittel auf, bei der Trocknung wird Adsorptionswärme frei, zur Desorption wird dem System Wärme zugeführt. Anwendungsgebiet ist die Fahrzeugtechnik, um bei Druckschwankungen und dem Eindringen von feuchter Luft die verwendeten Batterien zu schützen. Ebenfalls bekannt ist aus der EP 2 394 330 A1 mittels Adsorption auch Schadstoffe für Batteriesysteme in der Fahrzeugtechnik abzuscheiden. Diese Trocknungen müssen aber praktisch vollständig erfolgen, um Korrosion zu verhindern und empfindliche Lithium-lonen-Zellen zu schützen und auch bei winterlichen Verhältnissen Frostbildung und gefährliche Frostschäden sicher zu vermeiden.

Die DE 10 2011 116 863 A1 beschreibt ein Verfahren zur Sicherung einer Vorrichtung für einen thermodynamischen Kreisprozess, welche mit einem Prozessfluid betrieben wird, das mindesten eine umweltgefährliche, giftige und/oder entzündliche Substanz enthält oder daraus besteht. Im Falle einer Leckage in der Vorrichtung für einen thermodynamischen Kreisprozess wird ein Adsorptionsmittel mit dem Prozessfluid, insbesondere Ammoniak, Propan oder Propen, in Kontakt gebracht und die Substanz durch das Adsorptionsmittel selektiv gebunden. Das Adsorptionsmittel wird nach Gebrauch regeneriert. Als Adsorptionsmittel werden Zeolith, auch in Kombination mit Imidazol oder Phosphaten, ferner CuBTC vorgeschlagen. Das Adsorptionsmittel kann in Form einer Schüttung, eines Formteils, eines Anstrichs, eines Sprühfilms oder einer Beschichtung ausgestattet sein. Die Trägerstruktur des Formteils kann aus Mikrostruktur, Lamellenstruktur, Rohrbündel, Rohrregister und Blech bestehen und muss mechanisch stabil sowie stark oberflächenvergrößernd sein. Eine Umwälzung der potenziell kontaminierten Luft erfolgt üblicherweise kontinuierlich, kann aber auch durch einen Sensor initiiert werden, der die Lüftung nach Erreichen eines Schwellenwerts oder bei einem erkannten Havariefall einschaltet. Die Adsorption kann innerhalb oder außerhalb eines geschlossenen Raums durchgeführt werden.

Der Nachteil dieser Adsorptionsmittel ist, dass diese meist hydrophil sind und zur Co-Adsorption von Wasser bzw. Wasserdampf und zu Kältemitteldämpfen neigen. Diese Co-Adsorption kann zu einer Kapazitätsminderung des Adsorptionsmittels für die Aufnahme des entzündlichen oder toxischen Kältemittels führen. Gemäß dem Stand der Technik werden solche potenziellen Kapazitätsminderungen durch eine Überdimensionierung des Adsorbers ausgeglichen. Dies führt zu größeren Absorbern, zusätzlichem Bedarf an Bauraum und Kosten. Gleichzeitig kann die Beladung von Wasser bzw. Wasserdampf über sehr lange Zeiträume, etwa Monate bis Jahre, durch Undichtigkeiten innerhalb des Wärmepumpengehäuses oder durch dieses hindurch erfolgen. Ebenfalls sind oft Sicherheitsventile in den Wärmeträgerkreisläufen installiert, die bei Überdruck im Heizungskreislauf oder im Kühlkreislauf Wasser oder wässrige Lösungen abgeben. Siphonmaßnahmen zur Ableitung von kondensiertem Wasser sind sehr komplex in der Integration aufgrund der beengten Platzverhältnisse unterhalb des Kältekreises und müssen gegen das Ausströmen von Kältemittel über eine Siphon-Dränage abgesichert werden.

Diese Besonderheiten unterscheiden sich einerseits von Systemen, die Batterien schützen, andererseits von Wärmepumpenbauformen, bei denen Feuchtigkeit nur über die Umgebungsluft im Aufstellungsraum oder im Freien eingetragen werden kann.

Die Aufgabe der Erfindung ist daher, eine Vorrichtung und ein Verfahren bereitzustellen, welches den Eintrag von Wasser bzw. Wasserdampf aus einem Wärmepumpengehäuse in einen Kältemitteladsorber, der leckagebedingtes Kältemittel adsorbieren soll, dauerhaft verhindert. Hierbei muss die Luft im Wärmepumpengehäuse in der Regel unter einem Feuchtegehalt von 60 Prozent relativer Luftfeuchte gehalten werden, da eine höhere Luftfeuchtigkeit die Beladungskapazität des Sorptionsbettes im Kältemitteladsorber zu sehr verringert. Das betrifft vor allem Adsorptionsmittel, mit denen das für Wärmepumpen hocheffiziente R290 gut adsorbierbar ist. Die Luft ist daher zu trocknen und das Kondensat ist abzuführen, wobei gleichzeitig zu verhindern ist, dass dabei Gefahr entsteht, wenn eine Leckage im Kältekreis aufgetreten ist. Eine solche Gefahr bewirkt normalerweise einen Druckanstieg, der durch den zum Aufstellungsraum hin offenen Adsorber schnell abgebaut werden kann, wobei der Strömungsdruckverlust in diesem Adsorber den im Wärmepumpengehäuse vorherrschenden Druck begrenzt. Im Falle eines Abzugs von Flüssigkeit im unteren Bereich des Wärmepumpengehäuses muss diese Abzugsvorrichtung aber so vorgenommen werden, dass sie nicht leergeblasen werden kann, denn dann könnte ein entzündliches Gemisch über den Flüssigkeitsabzug entweichen.

Im Gegensatz zu den bekannten Technologien, bei denen die in das Wärmepumpengehäuse eintretende Luft getrocknet wird, geht es in diesem Fall daher vor allem um Feuchtigkeit, die durch die Einrichtungen innerhalb des Wärmepumpengehäuses selbst entsteht, vorzugsweise wird durch Umgebungsluft eingetragene Feuchtigkeit gleich mitabgeschieden. Derartiges geschieht etwa dadurch, dass innerhalb des Wärmepumpengehäuses auch die Überdruckventile von Kältekreis und Wärmeträgerkreis angeordnet sind. Da auch Leckagen des Wärmetauschers zu einem Übertritt von Kältemittel in den Wärmeträgerkreis möglich sind, ist es durchaus sinnvoll, die entsprechenden Ventile im Wärmepumpengehäuse anzuordnen, denn dann wird das entweichende Kältemittel gegebenenfalls vom Adsorber gleich mitabgeschieden. Dann aber kommt Wasser aus dem Wärmeträgerkreislauf mit und verringert die Aufnahmefähigkeit des Sorptionsbettes für Kältemittel. Dieses Wasser wird also nicht aus dem Aufstellungsraum eingetragen, sondern durch Sicherheitsventile, vor allem des Wärmeträgerkreises, eingebracht.

Die Erfindung löst die Aufgabe durch eine Kondensationsvorrichtung zur moderaten Verringerung des Feuchtegehalts im Wärmepumpengehäuse einer Wärmepumpe mittels zyklischer Adsorption,
- wobei die Wärmepumpe mit einem Kältekreis und einem brennbaren Kältemittel betrieben wird,
- die Wärmepumpe mit allen Kältemittel führenden Installationen von einem geschlossenen Wärmepumpengehäuse umschlossen ist,
- welches über einen Kältemitteladsorber mit einem Sorptionsbett verfügt, mit dem brennbare Kältemittel adsorptiv gefiltert werden können, bevor sie das Wärmepumpengehäuse durch den Adsorptionsfilter in die Aufstellungsumgebung des Wärmepumpengehäuses verlassen können, wobei
- ein Wasserdampfadsorber mit einem anströmbaren weiteren Sorptionsbett im Wärmepumpengehäuse vorgesehen wird, das mit einem Sorptionsmittel ausgestattet ist, mit welchem selektiv Wasserdampf adsorbiert wird, Kältemitteldampf jedoch nicht,
- der Wasserdampfadsorber mit einer Heizeinrichtung versehen ist, mit dem eine zur Teildesorption geeignete Temperatur erreicht werden kann,
- der Wasserdampfadsorber mit einer Kühleinrichtung versehen ist, mit dem desorbierter Wasserdampf auskondensiert werden kann,
- eine Auffangvorrichtung für Kondensat vorgesehen ist, und
- eine abdichtbare Einrichtung zur Abführung des Kondensats vorgesehen ist.

Der Kältemitteladsorber und der Wasserdampfadsorber bilden dabei ein zusammenwirkendes System. In einer Ausgestaltung ist vorgesehen, dass der Wasserdampfadsorber als ein gasdichtes Gehäuse mit einer Eintrittsöffnung und einer unten angeordneten Austrittsöffnung ausgeführt ist, wobei die Eintrittsöffnung und die Austrittsöffnung durch Ventile gebildet werden, die durch einen Kopplungsmechanismus mechanisch miteinander verbunden sind, der so gestaltet ist, dass das Öffnen des einen Ventils mit dem Schließen des jeweils anderen Ventils verbunden ist.

In einer weiteren Ausgestaltung ist vorgesehen, dass die Betätigung des Kopplungsmechanismus zum Öffnen und Schließen der Ventile durch einen elektrischen Aktor erfolgt. Weitere Ausgestaltungen betreffen den Aktor. So kann alternativ vorgesehen werden, dass der Aktor aus einer Bimetallspule oder aus einer Formgedächtnislegierung wie beispielsweise Nitinol gebildet ist. Es kann weiterhin vorgesehen werden, dass der Aktor durch eine Feder vorgespannt ist.

In weiteren Ausgestaltungen wird vorgesehen, dass der Aktor mit einem Heizelement kombiniert ist. Das ist besonders dann sinnvoll, wenn zur Betätigung des Aktors eine Formgedächtnislegierung zum Einsatz kommt. Das Heizelement kann dabei ein Peltierelement sein. Der Aktor kann mit einer Strommessung zur Überwachung ausgestattet sein.

In einer anderen Ausgestaltung ist vorgesehen, dass der Wasserdampfadsorber als ein Gehäuse mit einer aus einer semipermeablen Membran gebildeten Eintrittsöffnung und einer unten angeordneten Austrittsöffnung ausgeführt ist, wobei die semipermeable Membran wasserdampfdurchlässig und luftdurchlässig, aber nicht kältemitteldurchlässig ist. Das wird im Fall von R290 beispielsweise dadurch erreicht, dass die Porengröße der Membran 3 Angström entspricht.

In dieser Ausgestaltung kann vorgesehen werden, dass der Wasserdampfadsorber mit einer Heizfläche, die am Sorptionsbett anliegt, und einer Kühlfläche, die vom Sorptionsbett wegweist, ausgestattet ist.

In allen Ausgestaltungsvarianten kann vorgesehen werden, dass als Mittel zum Aufheizen des Sorptionsbettes ein elektrisches Heizelement und als Mittel zum Kühlen des Sorptionsbettes ein fluidischer Kühler, beispielsweise ein Wasserkühler, dienen. Auch ein Kondensator für Kältemittel aus dem Kältekreis kann verwendet werden. Eine besonders elegante Methode ist die Verwendung eines Peltierelements zum Aufheizen für die Desorption auf der heißen Seite und das Kühlen des Sorptionsbettes im Anschluss an die erfolgte Desorption auf der kalten Seite des Peltierelements. Bei Verwendung von zwei Sorptionsbetten, kann dies im Wechsel erfolgen.

Weitere Ausgestaltungsvarianten betreffen den Ablauf. Da aufgrund der Kondensation stets auch ein Unterdruck entsteht, erfolgt durch den Ablauf für Kondensat gleichzeitig ein Druckausgleich, wobei Luft aus dem Aufstellungsraum angesaugt wird, nicht aus dem Wärmepumpengehäuse, wenn es sich um eine Ausführungsform mit einem geschlossenen Gehäuse handelt. Für die semipermeable Membran ist das dagegen unproblematisch, da der Druckausgleich über die Membran durch den Austausch von Luftbestandteilen funktioniert. Der Ablauf ist gegebenenfalls größer als für die reine Kondensatabfuhr zu dimensionieren. Ferner ist der Ablauf vor Verunreinigungen zu schützen. In Ausgestaltungen ist daher vorgesehen, dass als Schutz im Ablauf ein Siphon verwendet wird und Mittel zum Schutz von Fehlstellungen, Verschmutzungen und Partikeln auf dem Ventilsitz des Ablaufs vorgesehen werden.

Weitere Ausgestaltungen betreffen die Sorptionsmittel, wobei für die Adsorption von Wasserdampf auf bewährten Stand der Technik zurückgegriffen werden kann. Das Sorptionsmittel wird dafür aus der Gruppe gebildet aus Silicagel, Zeolith 3A, Kalziumchlorid, Magnesiumchlorid, Magnesiumsulfat und Lithiumchlorid oder aus Mischungen daraus gewählt. Als Trägermaterial zur Stabilisierung des Sorptionsmittels werden Aktivkohle, Silicagel, Polymermatrix und/oder mit Graphit angereicherte Polymermatrix vorgesehen.

Die Erfindung löst die Aufgabe auch durch ein Verfahren zur Verringerung des Wasserdampfgehalts im Wärmepumpengehäuse einer Wärmepumpe auf einen Wert unterhalb eines vorgebbaren Gehalts von beispielsweise 60 % relativer Luftfeuchte durch Kondensation von Wasserdampf, indem Wasserdampf zunächst in einem Sorptionsbett adsorbiert wird und sobald ein definierter Wert für die Luftfeuchte erreicht oder überschritten wird, eine Desorption durch Erhitzung des Sorptionsbettes erfolgt und danach der desorbierte Wasserdampf gekühlt, auskondensiert und abgeführt wird.

Der vorgebbare Gehalt der relativen Luftfeuchte hängt dabei vom Kältemittel und somit vom Adsorptionsmittel im Kältemitteladsorber ab. Wenn das Adsorptionsmittel im Kältemitteladsorber Aktivkohle ist und das Kältemittel R290 ist, beträgt der Vorgabewert der relativen Luftfeuchte für den Wasserdampfadsorber 60 %.

Mit Aktivkohle als Adsorptionsmittel für gasförmiges Kältemittel in Luft und einem Vorgabewert von 60 % relativer Luftfeuchte können die folgenden Kältemittel ebenfalls abgeschieden werden: R290 (Propan), R1270 (Propylen), R50 (Methan), R170 (Ethan), R600 (Butan), R600a (Isobutan), (2-methyl-propan), R601 (Pentan), R601a (Isopentan), RE270 (Dimethylether). Falls andere Adsorptionsmittel im Kältemitteladsorber zur Anwendung kommen sollen, wird der Fachmann messen, ab welcher relativen Luftfeuchte der Wasserdampf zur Verminderung der Adsorption von Kältemittel führt und welcher Vorgabewert für die relative Feuchte für den Wasserdampfadsorber zu wählen ist.

Die Erfindung wird nachfolgend anhand von Figuren näher erläutert. Dabei zeigen:
- Fig. 1: schematisch ein Wärmepumpengehäuse 1 mit Kältekreis, Kältemitteladsorber 3 und Wasserdampfadsorber 10,
- Fig. 2,: schematisch einen geöffneten Wasserdampfadsorber 10 während der Adsorptionsphase,
- Fig. 3: schematisch einen geschlossenen Wasserdampfadsorber 10 während der Desorptionsphase,
- Fig. 4: schematisch einen offenen Wasserdampfadsorber 10 mit einer Membran 201 so wie Heiz- und Kühlelementen,
- Fig. 5,: schematisch einen offenen Wasserdampfadsorber 10 mit einer Membran 301 und einem Peltierelement 303.

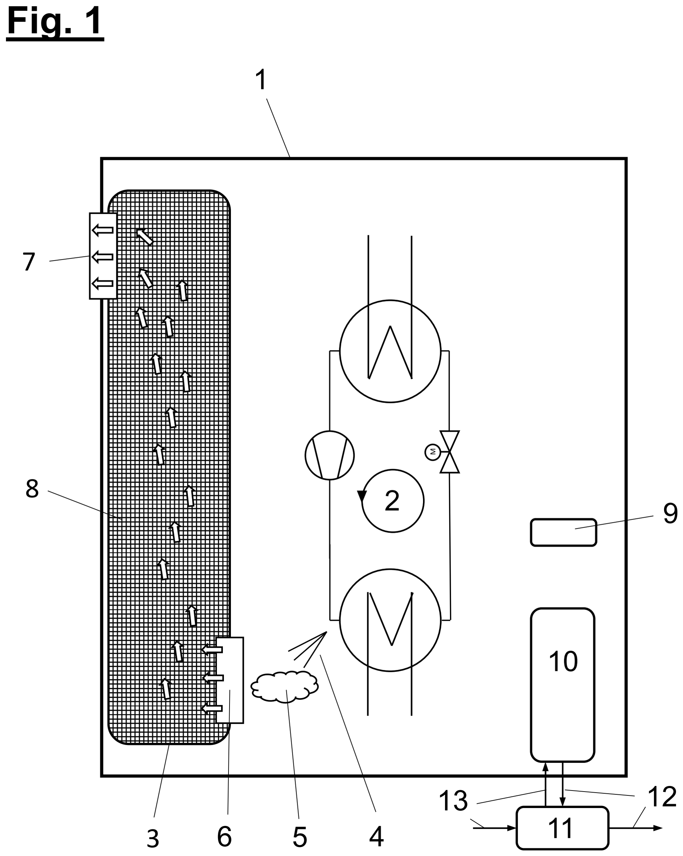

Fig. 1 zeigt schematisch ein Wärmepumpengehäuse 1 mit Kältekreis 2, Kältemitteladsorber 3 und Wasserdampfadsorber 10. Der Kältemitteladsorber 3 dient dabei der Abscheidung von Kältemittel, welches aus einer Leckage 4 ausgetreten ist und in unbekannter Konzentration als Kältemittel-Luftgemisch 5 zum Eintrittsbereich 6 des Kältemitteladsorbers 3 strömt, im Sorptionsbett 8 des Kältemitteladsorbers 3 dann gefiltert wird und den Kältemitteladsorber 3 gereinigt am Austritt 7 verlässt. Diese Technologie ist bekannter Stand der Technik und als solcher nicht Gegenstand der Erfindung. Es ist jedoch bekannt, dass übliche Adsorptionsmittel wie Aktivkohle durch Wasserdampf teilweise gegenüber Kältemittel inaktiviert werden, wenn der Wasserdampfgehalt eine relative Feuchte von 60 Prozent in Luft überschreitet.

Daher sieht die Erfindung vor, den Wasserdampfgehalt mit der Feuchtemessung 9 zu messen und, falls ein definierter Wert relativer Luftfeuchte erreicht oder überschritten wird, mittels des Wasserdampfadsorbers 10 als Wasser auszukondensieren und in einer Kondensattrennung 11 als Kondensat 12 abzuführen. Sofern bei der Kondensation ein Unterdruck entsteht, wird über die Kondensattrennung 11 Umgebungsluft 13 in den Wasserdampfadsorber 10 zum Druckausgleich eingeleitet.

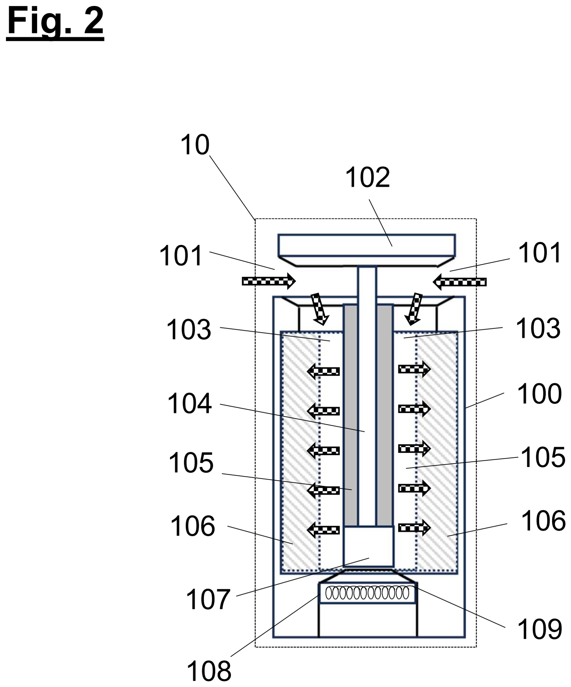

Fig. 2 zeigt schematisch einen geöffneten Wasserdampfadsorber 10 während der Adsorptionsphase, bei der feuchte Luft, dargestellt mit Pfeilen, durch die Eintrittsöffnung 101 eintritt. Die Eintrittsöffnung 101 wird dabei vom oberen Ventildeckel 102, der sich in seiner Öffnungsposition befindet, freigegeben, damit feuchte Luft in die Vorkammer 103 einströmen kann. Die Vorkammer 103 umfasst dabei den Raum direkt unterhalb des oberen Ventildeckels 102 und dem Teil des Innenraums des Wasserdampfadsorbers 10, der nicht von den nachfolgend beschriebenen Einrichtungen ausgefüllt wird, also beispielsweise umfasst er auch alle Zwischenräume, in denen sich feuchte Luft befindet oder befinden kann.

Der Ventildeckel 102 wird dabei von einem Stößel 104 gehalten, dessen Unterseite 107 zum Auslassventil 108 hin den Gasraum der Vorkammer 103 abdichtet, und der von der elektrischen Heizeinrichtung 105 umschlossen ist. Die Stößelunterseite weist hierbei einen Innenraum auf, der ggf. kondensiertes oder kondensierendes Wasser aufnehmen kann. Der Stößel 104 übernimmt hier die Funktion des Aktors, je nach Ausführungsvariante kann das auch eine Hebelkonstruktion sein. Aus der Vorkammer 103 diffundiert die feuchte Luft in das Sorptionsbett 106, wo Wasserdampf adsorbiert wird.

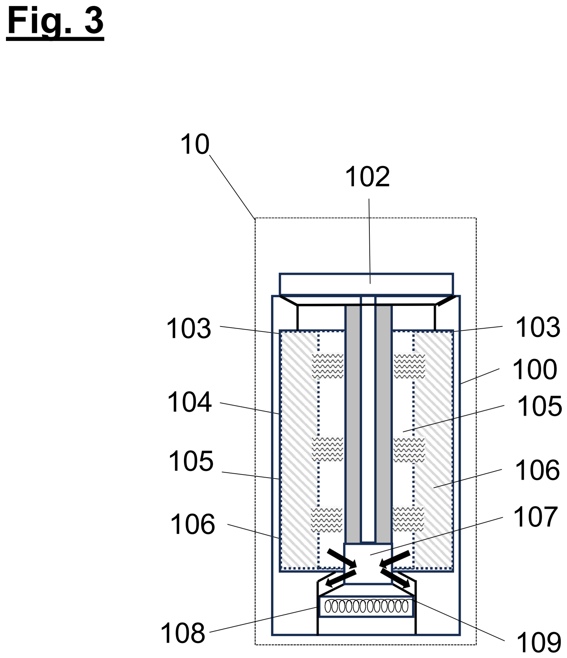

Fig. 3 zeigt schematisch einen geschlossenen Wasserdampfadsorber 10 während der Desorptionsphase, bei der die Eintrittsöffnung 101 durch den Ventildeckel 102 verschlossen ist und keine feuchte Luft mehr in die Vorkammer 103 eintreten kann. Durch das Herabdrücken des Stößels 104, sei es elektrisch oder mittels eines Materials mit Formerinnerungseigenschaften, wird das Auslassventil 108 freigegeben, während die Heizelemente 105 das Sorptionsbett 106 erhitzen, was durch Wellen angedeutet wird, und den Wasserdampf austreiben. Der Wärmeeintrag findet durch Strahlungswärme statt. Der austretende Wasserdampf hat dabei die Temperatur der durch die Heizelemente 105 erzeugten Temperatur im Sorptionsbett 106, typischerweise liegt die Temperatur zwischen 50 und 80 Grad Celsius, je nach verwendetem Sorptionsmittel.

Das führt dazu, dass die Kondensation des desorbierten Wasserdampfes durch Kühlung erreicht werden muss. Bei geringen Mengen reicht es dabei aus, einfach auf den Temperaturausgleich des Wasserdampfadsorbers 10 mit der Umgebung des ihn umgebenden Wärmepumpengehäuses 1 zu warten, da eine Re-Adsorption in das Sorptionsbett 106 zurück nur in sehr geringem Umfang stattfindet. Dann sammelt sich das Kondensat in der Unterseite 107 des Stößels und läuft durch das geöffnete Auslassventil 108 in die Kondensat trennung 11 (siehe Fig. 1) ab.

Wenn es aber schneller gehen soll, etwa wenn der von der Messeinrichtung 9 gemessene Wasserdampfgehalt im Wärmepumpengehäuse 1 aus unerfindlichen Gründen schnell ansteigen sollte, ist eine Zwangskondensation mittels Kühlung der Vorkammer 103 und/oder der Stößelunterseite 107 erforderlich. Dies wird dann durch Kühlung der Stößelunterseite 107 oder dem Ventilkörper des Auslassventils 108 vorgenommen. Die Anschlüsse für Kühlflüssigkeit und/oder ein Peltierelement sind hier nicht gezeigt.

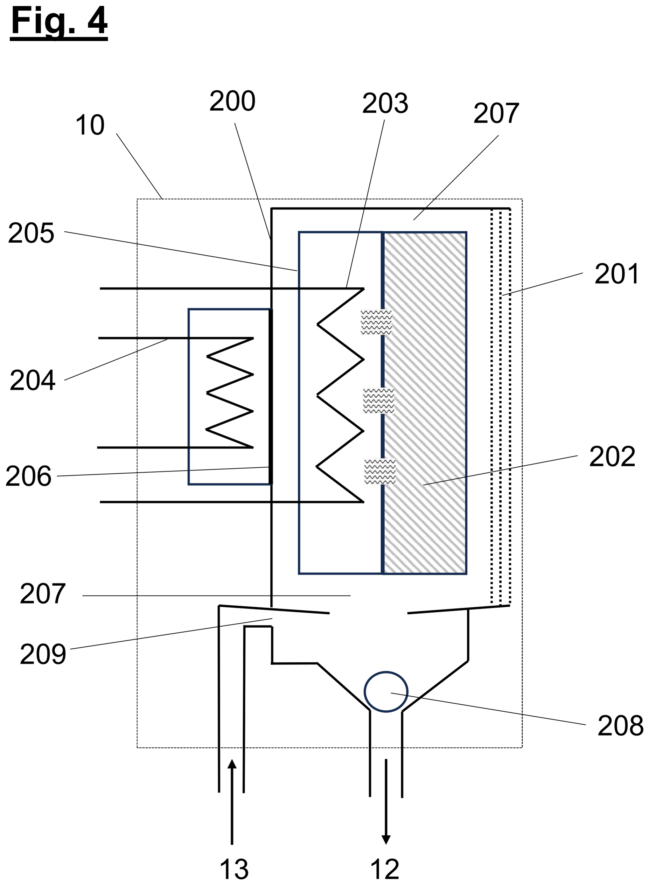

Fig. 4 zeigt schematisch einen offenen Wasserdampfadsorber 10 mit einer Membran 201. Die Membran 201 ist dabei selektiv und lässt nur Wasserdampf und Luft hindurch, Kältemittel aber nicht, üblicherweise ist sie großflächig und wird von einem Trägermaterial mechanisch gestützt. Sie entspricht in ihrer technischen Funktion der Eintrittsöffnung 101 der Fig. 2 und Fig. 3, ist im Gegensatz dazu aber nicht verschließbar, somit ist das Wasserdampfadsorbergehäuse 200 immer offen. Durch diese Membran 201 tritt die feuchte Luft in das Sorptionsbett 202 und wird adsorbiert. Auf der gegenüberliegenden Seite des Sorptionsbettes befindet sich die Heizeinrichtung 203, typisch sind hierfür elektrische Heizschlangen. Die Heizschlangen und das Sorptionsbett 202 befinden sich im Sorptionsbehälter 205, dessen Wandungen aus einem gasdurchlässigen Gittermaterial bestehen.

Schon während der laufenden Adsorption findet eine Desorption statt, wenn die Messeinrichtung 9 einen Feuchtegehalt von 60 Prozent relativer Feuchte misst. Die Desorption wird durch Aufheizung des Desorptionsbettes 202 erreicht, was in Fig. 2 durch Wärmewellen angedeutet wird. Der desorbierte Wasserdampf strömt durch die Kammer 207, die den Sorptionsbehälter 205 umgibt, zur Kühlfläche 206, die von Kühlflüssigkeit 204 gekühlt wird. Als Kühlflüssigkeit 204 dient Wasser bei Raumtemperatur.

An der Kühlfläche 206 kondensiert Wasser aus und läuft nach unten ab, wo es aufgefangen und als Kondensat 12 in die Kondensattrennung 11 eingeleitet wird. Die Schwimmerkugel 8 betätigt dabei den Abzug, sobald sich genügend Kondensat angesammelt hat, sie sorgt auch dafür, dass keine direkte hydraulische Verbindung zum Inneren des Wärmepumpengehäuses 1 entsteht, die zu Problemen im Kondensatmanagement führen könnte. Die nötige direkte hydraulische Verbindung zum Wärmepumpengehäuse 1 wird durch einen Abzweig 209 bewirkt, der mit der Kondensattrennung verbunden ist und für den Fall, dass im Wärmepumpengehäuse Unterdruck entstanden ist, Umgebungsluft 13 zuführen kann, die über die Membran 201 einen Druckausgleich herbeiführen kann.

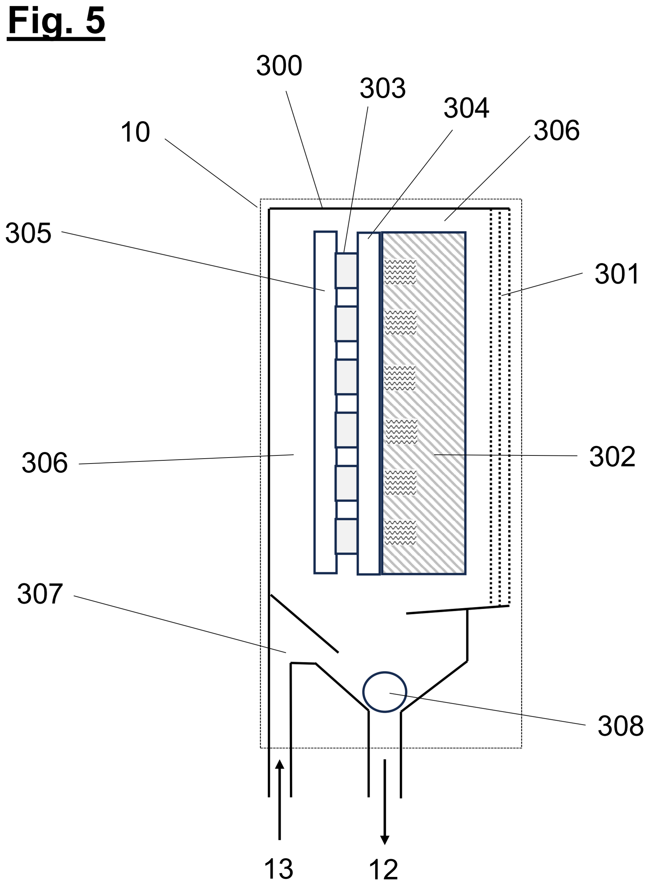

Fig. 5 zeigt wie Fig. 4 schematisch einen offenen Wasserdampfadsorber 10 mit einer Membran 301, die der in Fig. 4 gezeigten Membran 201 im Wesentlichen entspricht. Ebenso entspricht das Sorptionsbett 302 dem in Fig. 4 gezeigten Sorptionsbett 202 und das Wasserdampfadsorbergehäuse dem Wasserdampfadsorbergehäuse 200 in Fig. 4. Hauptunterschied ist die Verwendung eines Peltierelements 303, welches auf seiner heißen Seite 304 die Desorption bewirkt, wenn die Messeinrichtung 9 einen Feuchtegehalt von 60 Prozent relativer Feuchte misst. Auf der kalten Seite 305 des Peltierelements 303 findet gleichzeitig die Kondensation statt, der desorbierte Wasserdampf strömt hierfür durch die Kammer 306 zur kalten Seite 305. Eines gemeinsamen Gehäuses für die heiße Seite 304 und des Sorptionsbettes 302 bedarf es hier nicht, die ganze kalte Seite 305 übernimmt die Funktion der Kühlfläche 206 der Fig. 4. Der Ablauf für das Kondensat entspricht dem in Fig. 4 gezeigten, es werden eine Schwimmerkugel 308 und ein Abzweig 307 vorgesehen, die weitere Trennung der Phasen erfolgt in der Kondensattrennung 11.

### Bezugszeichenliste

- 1: Wärmepumpengehäuse
- 2: Kältekreis
- 3: Kältemitteladsorber
- 4: Leckage
- 5: Kältemittel-Luftgemisch
- 6: Eintrittsbereich
- 7: Austritt
- 8: Sorptionsbett
- 9: Feuchtemessung
- 10: Wasserdampfadsorber
- 11: Kondensattrennung
- 12: Kondensat
- 13: Umgebungsluft
- 100: Wasserdampfadsorbergehäuse
- 101: Eintrittsöffnung
- 102: Oberer Ventildeckel
- 103: Vorkammer
- 104: Stößel
- 105: Heizeinrichtung (elektrisch)
- 106: Sorptionsbett
- 107: Stößelunterseite
- 108: Austrittsöffnung (Auslassventil)
- 109: Kühlung
- 200: Wasserdampfadsorbergehäuse
- 201: Membran
- 202: Sorptionsbett
- 203: Heizeinrichtung
- 204: Kühlflüssigkeit
- 205: Sorptionsbehälter
- 206: Kühleinrichtung (Kühlfläche)
- 207: Kammer
- 208: Schwimmerkugel
- 209: Abzweig
- 300: Wasserdampfadsorbergehäuse
- 301: Membran
- 302: Sorptionsbett
- 303: Peltierelement
- 304: Heizeinrichtung (heiße Seite)
- 305: Kühleinrichtung (kalte Seite)
- 306: Kammer
- 307: Abzweig
- 308: Schwimmerkugel

## Patentansprüche

1. Kondensationsvorrichtung zur moderaten Verringerung des Feuchtegehalts im Wärmepumpengehäuse (1) einer Wärmepumpe mittels thermozyklischer Adsorption,
- wobei die Wärmepumpe mit einem Kältekreis (2) und einem brennbaren Kältemittel betrieben wird,
- die Wärmepumpe mit allen Kältemittel führenden Installationen von einem geschlossenen Wärmepumpengehäuse (1) umschlossen ist,
- welches über einen Kältemitteladsorber (3) mit einem Sorptionsbett (8) verfügt, mit dem brennbare Kältemittel adsorptiv gefiltert werden können, bevor sie das Wärmepumpengehäuse (1) durch den Austritt des (7) des Kältemitteladsorbers (3) in die Aufstellungsumgebung des Wärmepumpengehäuses (1) verlassen können,
**dadurch gekennzeichnet, dass**
- ein Wasserdampfadsorber (10) mit einem weiteren anströmbaren Sorptionsbett (106, 202, 302) im Wärmepumpengehäuse (1) vorgesehen wird, das mit einem Sorptionsmittel ausgestattet ist, mit welchem selektiv Wasserdampf adsorbiert wird, Kältemitteldampf jedoch nicht,
- der Wasserdampfadsorber (10) mit einer Heizeinrichtung (105, 203, 304) versehen ist, mit dem eine zur Desorption geeignete Temperatur erreicht werden kann,
- der Wasserdampfadsorber (10) mit einer Kühleinrichtung (109, 206, 305) versehen ist, mit dem desorbierter Wasserdampf auskondensiert werden kann,
- eine Auffangvorrichtung für Kondensat (12) vorgesehen ist, und
- eine Einrichtung zur Abführung des Kondensats (12) vorgesehen ist.

2. Kondensationsvorrichtung nach Anspruch 1, **dadurch gekennzeichnet, dass** der Wasserdampfadsorber (10) als ein gasdichtes Gehäuse mit einer Eintrittsöffnung (101) und einer unten angeordneten Austrittsöffnung (108) ausgeführt ist, wobei die Eintrittsöffnung (101) und die Austrittsöffnung (108) durch Ventile gebildet werden, die durch einen Kopplungsmechanismus mechanisch miteinander verbunden sind, der so gestaltet ist, dass das Öffnen des einen Ventils mit dem Schließen des jeweils anderen Ventils verbunden ist.

3. Kondensationsvorrichtung nach Anspruch 2, **dadurch gekennzeichnet, dass** die Betätigung des Kopplungsmechanismus zum Öffnen und Schließen der Ventile durch einen elektrischen Aktor erfolgt.

4. Kondensationsvorrichtung nach Anspruch 3, **dadurch gekennzeichnet, dass** der Aktor aus einer Bimetallspule gebildet ist.

5. Kondensationsvorrichtung nach Anspruch 3, **dadurch gekennzeichnet, dass** der Aktor aus einer Formgedächtnislegierung gebildet ist.

6. Kondensationsvorrichtung nach Anspruch 5, **dadurch gekennzeichnet, dass** der Aktor aus Nitinol gebildet ist.

7. Kondensationsvorrichtung nach einem der Ansprüche 3 bis 6, **dadurch gekennzeichnet, dass** der Aktor durch eine Feder vorgespannt ist.

8. Kondensationsvorrichtung nach einem der Ansprüche 3 bis 7, **dadurch gekennzeichnet, dass** der Aktor mit einem Heizelement kombiniert ist.

9. Kondensationsvorrichtung nach einem der Ansprüche 3 bis 8, **dadurch gekennzeichnet, dass** der Aktor mit einer Strommessung zur Überwachung ausgestattet ist.

10. Kondensationsvorrichtung nach Anspruch 1, **dadurch gekennzeichnet, dass** der Wasserdampfadsorber (10) als ein Wasserdampfadsorbergehäuse (200, 300) mit einer aus einer semipermeablen Membran (201, 301) gebildeten Eintrittsöffnung und einer unten angeordneten Austrittsöffnung ausgeführt ist, wobei die semipermeable Membran (201, 301) wasserdampfdurchlässig und luftdurchlässig, aber nicht kältemitteldurchlässig ist.

11. Kondensationsvorrichtung nach Anspruch 10, **dadurch gekennzeichnet, dass** der Wasserdampfadsorber (10) mit einer Heizeinrichtung (203, 304), die am Sorptionsbett (202, 302) anliegt, und einer Kühleinrichtung (206, 305), die vom Sorptionsbett (202, 302) wegweist, ausgestattet ist.

12. Kondensationsvorrichtung nach einem der Ansprüche 1 bis 11, **dadurch gekennzeichnet, dass** als Mittel zum Aufheizen des Sorptionsbettes (202, 302) ein elektrisches Heizelement dient.

13. Kondensationsvorrichtung nach einem der Ansprüche 1 bis 11, **dadurch gekennzeichnet, dass** als Mittel zum Kühlen des Sorptionsbettes (202, 302) ein fluidischer Kühler dient.

14. Kondensationsvorrichtung nach einem der Ansprüche 1 bis 13, **dadurch gekennzeichnet, dass** als Mittel zum Kühlen des Sorptionsbettes (202, 302) ein Kondensator dient.

15. Kondensationsvorrichtung nach einem der Ansprüche 1 bis 14, **dadurch gekennzeichnet, dass** als Mittel zum Aufheizen und/oder Kühlen des Sorptionsbettes (302) ein Peltierelement (303) dient.

16. Kondensationsvorrichtung nach einem der Ansprüche 1 bis 15, **dadurch gekennzeichnet, dass** als Schutz im Ablauf ein Siphon verwendet wird und Mittel zum Schutz von Fehlstellungen, Verschmutzungen und Partikeln auf dem Ventilsitz des Ablaufs vorgesehen werden.

17. Kondensationsvorrichtung nach einem der Ansprüche 1 bis 15, **dadurch gekennzeichnet, dass** als Sorptionsmittel eines aus der Gruppe gebildet aus Silicagel, Zeolith 3A, Kalziumchlorid, Magnesiumchlorid, Magnesiumsulfat und Lithiumchlorid oder aus Mischungen daraus gewählt wird.

18. Kondensationsvorrichtung nach Anspruch 17, **dadurch gekennzeichnet, dass** als Trägermaterial zur Stabilisierung des Sorptionsmittels Aktivkohle, Silicagel, Polymermatrix und/oder mit Graphit angereicherte Polymermatrix vorgesehen werden.

19. Verfahren zur Verringerung des Wasserdampfgehalts im Wärmepumpengehäuse (1) einer Wärmepumpe auf unter einen definierten Wert relativer Luftfeuchte durch Kondensation von Wasserdampf, **dadurch gekennzeichnet, dass** Wasserdampf zunächst in einem Sorptionsbett (106, 202, 302) adsorbiert wird und sobald der definierte Wert relativer Luftfeuchte erreicht oder unterschritten wird, eine Desorption durch Erhitzung des Sorptionsbettes (106, 202, 302) erfolgt und danach der desorbierte Wasserdampf gekühlt, auskondensiert und abgeführt wird.

20. Verfahren nach Anspruch 19, **dadurch gekennzeichnet, dass** als definierter Wert relativer Luftfeuchte ein auf das Sorptionsbett (8) des Kältemitteladsorbers (3) und das Kältemittel abgestimmter Wert gewählt wird.

21. Verfahren nach einem der Ansprüche 19 oder 20, **dadurch gekennzeichnet, dass** als definierter Wert relativer Luftfeuchte für ein Sorptionsbett (8) aus Aktivkohle des Kältemitteladsorbers (3) und das Kältemittel R290 der Wert 60 Prozent gewählt wird.
